# EUROPÄISCHE PATENTSCHRIFT

(11) **EP 4 206 495 B1**
(45) Veröffentlichungstag und Bekanntmachung des Hinweises auf die Patenterteilung: **04.11.2026**
(21) Anmeldenummer: 23158233.9
(22) Anmeldetag: 10.09.2019
(51) Int. Cl.: F16H 57/022, F16H 57/038

(54) **GETRIEBE**
TRANSMISSION
TRANSMISSION

(30) Priorität: 11.09.2018 DE 202018105205 U
(43) Veröffentlichungstag der Anmeldung: 05.07.2023
(62) Dokumentnummer(n) der früheren Anmeldung(en) nach Art. 76 EPÜ: 19766020.2 / 3 850 246
(73) Patentinhaber: KUKA Deutschland GmbH, 86165 Augsburg (DE)
(72) Erfinder: HANDFEST, Alexander, 86568 Hollenbach (DE); LIEBL, Franz, 86551 Aichach (DE)
(74) Vertreter: Böss, Dieter Alexander

(56) Entgegenhaltungen:
- WO-A1-99/60289
- DE-A1- 102015 200 741
- DE-U1- 9 015 876

## Beschreibung

Die Erfindung betrifft ein Getriebe, aufweisend ein Getriebegehäuse, eine im Getriebegehäuse mittels einer ersten Lageranordnung drehbar gelagerte Antriebswelle, die ein erstes Kegelrad aufweist und eine im Getriebegehäuse mittels einer zweiten Lageranordnung drehbar gelagerte Abtriebswelle, die ein zweites Kegelrad aufweist, das mit dem ersten Kegelrad kämmend in Eingriff ist, sowie eine Einstellvorrichtung zum Einstellen des Zahnflankenspiels zwischen dem ersten Kegelrad und dem zweiten Kegelrad durch axiales Verstellen des ersten Kegelrades und/oder des zweiten Kegelrades.

Die DE 34 48 526 C2 beschreibt einen Manipulator mit einem Getriebekopf, der wenigstens ein antriebsseitiges Kegelrad und ein abtriebsseitiges Kegelrad aufweist, das mit dem antriebsseitigen Kegelrad kämmend in Eingriff ist.

Die DE 10 2015 200 741 A1, welche die Basis für die zweiteilige Form bildet, beschreibt ein Getriebe mit einem Gehäuse, einer ersten und einer zweiten Welle, die jeweils über ein Kegelzahnrad verfügen, wobei die beiden Kegelzahnräder sich in kämmendem Eingriff miteinander befinden, und die erste Welle mit einem ersten Kegelzahnrad als axial einstellbare Welle ausgebildet und hierfür mit zwei Wälzlagern beidseitig des Kegelzahnrades gelagert ist, wobei die Wälzlager jeweils über einen wellenseitigen Innenring und einen gehäuseseitigen Außenring verfügen. Eine Gestaltungsvariante sieht vor, dass nur eines der Wälzlager eine Lagefestigkeit gewährleistet, während beim zweiten Wälzlager zwischen dem Einstellelement und dem Außenringe eine Federeinrichtung vorgesehen ist. Die Einstellung des Verdrehspiels kann somit in begrenztem Maße allein durch Verdrehen eines Einstellelements bei gleichzeitiger Veränderung der Vorspannung bewirkt werden.

Die WO 99/60289 A1 beschreibt ein Getriebe mit einem ersten Zahnrad und einem zweiten Zahnrad, die miteinander in Eingriff stehen. Die Zähne der jeweiligen Zahnräder weisen eine Keilform auf, so dass der Zahneingriff durch eine axiale Verschiebung des zweiten Zahnrades einstellbar ist. Das Getriebe umfasst ein erstes kraftübertragendes Verlagerungselement, das dazu geeignet ist, das zweite Zahnrad in einer ersten axialen Richtung zu verlagern. Das Getriebe umfasst auch ein zweites kraftübertragendes Verlagerungselement, das das zweite Zahnrad in die entgegengesetzte Richtung verlagern kann.

Die DE 90 15 876 U1 beschreibt eine Wälzlagerung eines in einem Gehäuse zweiseitig mit Stirnspiel gelagerten Rotors eines Schraubenverdichters mit einem jeweils auf einem Wellenzapfen des Rotors und in einer Bohrung des Gehäuses angeordneten Los- bzw. Führungslager, wobei das Führungslager eine Wälzlagerkombination bestehend aus einem Radiallager und einem Axiallager, deren Innenringe im Einbauzustand fest gegen einen Anlaufbund des Wellenzapfens verspannt sind bei gleichzeitiger Vorspannung eines auf die Außenringe der Wälzlager wirkenden Federelementes, sowie ein in der Bohrung angeordnetes und auf die Wälzlagerkombination einwirkendes Einstellelement aufweist, wobei nach dem Einbau die innenliegende Stirnseite des Einstellelementes mit der auswärts liegenden Stirnseite des Außenringes des Axiallagers zur Anlage kommt und der Außenring des Axiallagers bei Aufrechterhaltung eines axialen Spieles um ein definiertes Maß entgegen der Wirkrichtung des Federelementes verschoben ist und diese Verschiebung der Stirnspieleinstellung für den Rotor entspricht.

Aufgabe der Erfindung ist es, ein Getriebe zu schaffen, bei dem das Zahnflankenspiel zwischen einem ersten Kegelrad und einem zweiten Kegelrad besonders genau und insbesondere auf einfache Weise einstellbar ist.

Die Aufgabe wird erfindungsgemäß gelöst durch ein Getriebe nach Anspruch 1, vorteilhafte Ausgestaltungen sind in den abhängigen Ansprüchen definiert.

Zum optimalen Lauf sollte ein Kegelradpaar ein definiertes Tragbild und Flankenspiel aufweisen. Da sowohl die Kegelräder selber, als auch die sonstigen strukturellen Bauteile Toleranzen aufgrund der Fertigungsprozesse aufweisen, kann der optimale Lauf nur durch einen Einstellprozess bei der Montage erreicht werden.

Klassisch werden Abstimmscheiben an geeigneter Stelle in der mechanischen Anbindung des Kegelrades eingebaut, um das Kegelrad durch Zulegen oder Wegnehmen der Abstimmscheiben in seiner Position axial zu verschieben. Nachteil dieser Methode ist die Notwendigkeit der genauen Vermessung aller beteiligten Bauteile zur Ermittlung des Einbaumaßes, sowie die limitierte Einstellgenauigkeit durch die Dicke der Abstimmscheibe.

Eine genauere Einstellung des Flankenspiels kann erreicht werden, indem mindestens eines der beiden Kegelräder durch Drehung eines Gewindes axial zugestellt wird. Dies ermöglicht eine stufenlose Einstellung, das Einstellmaß kann genauer erreicht werden, der Prozess ist Montage freundlicher und die genaue Vermessung der Bauteile entfällt.

Kritik an der Kegelradeinstellung mittels Gewinde ist die konstruktiv schwierige axiale Fixierung der Position nach erfolgter Zustellung. Eine Möglichkeit stellt das Vorspannen der Gewindepartner dar. Die Vorspannkraft muss deutlich höher als die auftretenden, insbesondere axialen Betriebslasten sein, um ein ungewolltes Verdrehen am Gewinde auszuschließen.

Indem die Einstellvorrichtung ein Wälzlager umfasst, das einen mit der Antriebswelle oder der Abtriebswelle fest verbundenen Innenring und einen im Getriebegehäuse axial verstellbar gelagerten Außenring aufweist, wobei die axiale Position des Außenrings des Wälzlagers mittels einer Gewindeanordnung einstellbar ist, die ein im Getriebegehäuse festgelegtes Innengewinde und ein mit dem Innengewinde zusammenwirkendes Außengewinde aufweist, das an einer Verstellmutter der Einstellvorrichtung ausgebildet ist, an der sich der Außenring abstützt, kann ein Getriebe geschaffen werden, bei dem das Zahnflankenspiel zwischen einem ersten Kegelrad und einem zweiten Kegelrad besonders genau und insbesondere auf einfache Weise einstellbar ist.

Das einzustellende Kegelrad ist mittels eines verstellbaren Wälzlagers einstellbar.

In einer speziellen Ausführungsform kann dies beispielsweise mittels einer Fest-Los-Lagerung erfolgen. Dadurch kann die Position des Kegelrads am Festlager eingestellt werden. Bei dieser Lösung wird das Festlager in einem Lagerflansch fixiert, welcher ein Gewinde am Außendurchmesser aufweist. Die Zustellung des Kegelrades erfolgt somit durch Drehung des Lagerflansches. Die Steigung des Gewindes ist mit beispielsweise 1 mm sehr klein gewählt, um eine möglichst feine Einstellung des Flankenspiels zu ermöglichen.

Nach erfolgter Kegelradeinstellung wird ein Klemm-/ Zentrierflansch in der umliegenden Struktur verschraubt. Zum einen dient dieser zweite Klemm-/ Zentrierflansch der Klemmung des Lagerflansches. Der Zentrierflansch drückt den Lagerflansch in sein Gewinde am Außenring, wodurch der Lagerflansch geklemmt und somit eine ungewollte Verdrehung verhindert wird.

Das Gewinde zum Einstellen des Kegelrades kann durch seine Funktion und durch den Fertigungsprozess Toleranz und Spiel behaftet sein. Das axiale Spiel wird deshalb durch die Klemmung aufgehoben. Das radiale Spiel bzw. der Rundlauf des Kegelrades kann durch eine zweite Funktion des Zentrierflansches korrigiert werden. Durch ausgewählte Passungen am Zentrierflansch, der Struktur und dem Lagerflansch wird der Lagerflansch und damit das Kegelrad bei Montage des Zentrierflansches in der gewünschten radialen Position zentriert.

Dabei kann die Verstellmutter einen Lagerringsitz aufweisen, in dem der Außenring des Wälzlagers axial fixiert ist, wobei die Verstellmutter erfindungsgemäß eine Außenmantelwand aufweist, an der das mit dem Innengewinde des Getriebegehäuses zusammenwirkende Außengewinde ausgebildet ist.

Außerdem kann die Gewindeanordnung, insbesondere das Innengewinde des Getriebegehäuses und das Außengewinde der Verstellmutter optional als ein Feingewinde ausgebildet sein, insbesondere als ein Feingewinde mit der Steigung 1.0, 0.75 oder 0.5 ausgebildet sein.

Des Weiteren kann die Einstellvorrichtung einen Klemmflansch aufweisen, welcher mittels Flanschschrauben an einem Flanschsitz des Getriebegehäuses befestigt ist und in seiner befestigten Anordnung am Flanschsitz des Getriebegehäuses die Verstellmutter axial verspannt und/oder festklemmt, so dass die Gewindeanordnung, insbesondere das Innengewinde des Getriebegehäuse und das Außengewinde der Verstellmutter gegen selbsttätiges Lösen gesichert ist.

Der Klemmflansch kann optional eine kreiszylindrische Innenumfangswand aufweisen, die mit einer korrespondierenden kreiszylindrischen Außenumfangswand an der Verstellmutter zusammenwirkt, derart, dass die Verbindung von Innenumfangswand und Außenumfangswand eine erste Passung bildet, welche die Verstellmutter bezüglich dem Klemmflansch zentriert, wobei der Klemmflansch außerdem eine kreiszylindrische Außenumfangswand aufweist, die mit einer korrespondierenden kreiszylindrischen Innenumfangswand an dem Getriebegehäuse zusammenwirkt, derart, dass die Verbindung von Außenumfangswand und Innenumfangswand eine zweite Passung bildet, welche den Klemmflansch bezüglich des Getriebegehäuses zentriert.

Die Verstellmutter kann optional eine Betätigungskontur aufweisen, die ausgebildet ist zum manuellen Drehen der Verstellmutter im Innengewinde des Getriebegehäuses mittels der Hand einer Person oder zum Drehen der Verstellmutter im Innengewinde des Getriebegehäuses mittels eines Handwerkzeugs, insbesondere eines Flanschschlüssels.

Die erste Verstellmutter kann einen ersten Lagerringsitz aufweisen, in dem der erste Außenring des ersten Wälzlagers axial fixiert ist und die erste Verstellmutter eine erste Außenmantelwand aufweisen, an der das mit dem ersten Innengewinde des Getriebegehäuses zusammenwirkende erste Außengewinde ausgebildet ist.

Die erste Gewindeanordnung, insbesondere das erste Innengewinde des Getriebegehäuses und das erste Außengewinde der ersten Verstellmutter können optional als ein Feingewinde ausgebildet sein, insbesondere als ein Feingewinde mit der Steigung 1.0, 0.75 oder 0.5 ausgebildet sein.

Die Einstellvorrichtung kann einen ersten Klemmflansch aufweisen, welcher mittels erster Flanschschrauben an einem ersten Flanschsitz des Getriebegehäuses befestigt ist und in seiner befestigten Anordnung am ersten Flanschsitz des Getriebegehäuses die erste Verstellmutter axial verspannt und/oder festklemmt, so dass die erste Gewindeanordnung, insbesondere das erste Innengewinde des Getriebegehäuse und das erste Außengewinde der ersten Verstellmutter gegen selbsttätiges Lösen gesichert ist.

Der erste Klemmflansch kann eine kreiszylindrische Innenumfangswand aufweisen, die mit einer korrespondierenden kreiszylindrischen Außenumfangswand an der ersten Verstellmutter zusammenwirkt, derart, dass die Verbindung von Innenumfangswand und Außenumfangswand eine erste Passung bildet, welche die erste Verstellmutter bezüglich dem ersten Klemmflansch zentriert, wobei der erste Klemmflansch außerdem eine kreiszylindrische Außenumfangswand aufweist, die mit einer korrespondierenden kreiszylindrischen Innenumfangswand an dem Getriebegehäuse zusammenwirkt, derart, dass die Verbindung von Außenumfangswand und Innenumfangswand eine zweite Passung bildet, welche den ersten Klemmflansch bezüglich des Getriebegehäuses zentriert.

Die erste Verstellmutter kann optional eine erste Betätigungskontur aufweisen, die ausgebildet ist zum manuellen Drehen der ersten Verstellmutter im ersten Innengewinde des Getriebegehäuses mittels der Hand einer Person oder zum Drehen der ersten Verstellmutter im ersten Innengewinde des Getriebegehäuses mittels eines Handwerkzeugs, insbesondere eines Flanschschlüssels.

Die zweite Verstellmutter kann einen zweiten Lagerringsitz aufweisen, in dem der zweite Außenring des zweiten Wälzlagers axial fixiert ist und die zweite Verstellmutter eine zweite Außenmantelwand aufweisen, an der das mit dem zweiten Innengewinde des Getriebegehäuses zusammenwirkende zweite Außengewinde ausgebildet ist.

Die zweite Gewindeanordnung, insbesondere das zweite Innengewinde des Getriebegehäuses und das zweite Außengewinde der zweiten Verstellmutter können optional als ein Feingewinde ausgebildet sein, insbesondere als ein Feingewinde mit der Steigung 1.0, 0.75 oder 0.5 ausgebildet sein.

Die Einstellvorrichtung kann einen zweiten Klemmflansch aufweisen, welcher mittels zweiter Flanschschrauben an einem zweiten Flanschsitz des Getriebegehäuses befestigt ist und in seiner befestigten Anordnung am zweiten Flanschsitz des Getriebegehäuses die zweite Verstellmutter axial verspannt und/oder festklemmt, so dass die zweite Gewindeanordnung, insbesondere das zweite Innengewinde des Getriebegehäuse und das zweite Außengewinde der zweiten Verstellmutter gegen selbsttätiges Lösen gesichert ist.

Der zweite Klemmflansch kann eine kreiszylindrische Innenumfangswand aufweisen, die mit einer korrespondierenden kreiszylindrischen Außenumfangswand an der zweiten Verstellmutter zusammenwirkt, derart, dass die Verbindung von Innenumfangswand und Außenumfangswand eine erste Passung bildet, welche die zweite Verstellmutter bezüglich dem zweiten Klemmflansch zentriert, wobei der zweite Klemmflansch außerdem eine kreiszylindrische Außenumfangswand aufweist, die mit einer korrespondierenden kreiszylindrischen Innenumfangswand an dem Getriebegehäuse zusammenwirkt, derart, dass die Verbindung von Außenumfangswand und Innenumfangswand eine zweite Passung bildet, welche den zweiten Klemmflansch bezüglich des Getriebegehäuses zentriert.

Die zweite Verstellmutter kann optional eine zweite Betätigungskontur aufweisen, die ausgebildet ist zum manuellen Drehen der zweiten Verstellmutter im zweiten Innengewinde des Getriebegehäuses mittels der Hand einer Person oder zum Drehen der zweiten Verstellmutter im zweiten Innengewinde des Getriebegehäuses mittels eines Handwerkzeugs, insbesondere eines Flanschschlüssels.

Erfindungsgemäß weißt die Verstellmutter eine erste Stirnringwand auf, an der sich der Außenring mit seiner ersten Stirnseite abstützt, wobei eine der ersten Stirnseite gegenüberliegende zweite Stirnseite des Außenrings einer Schulter am Getriebegehäuse zugewandt ist, und wobei in einem zwischen der zweiten Stirnseite des Außenrings und der Schulter ausgebildeten Ringspalt eine Spannfedereinrichtung eingefügt ist, welche ausgebildet ist, den Außenring axial gegen die Stirnringwand der Verstellmutter zu spannen. Das betrachtete Kegelrad in dieser erfindungsgemäßen Ausführungsform kann auch mit einer Fest-Los-Lagerung gelagert sein. Dadurch kann die Position des Kegelrads am Festlager eingestellt werden. Bei dieser Lösung wird das Festlager am Außenring verschoben anstatt an dem Innenring, da hier der Durchmesser größer ist und damit eine Spannfeder mit höherer Kraft ausgewählt werden kann. Der radiale Bauraum der Spannfeder ist im Allgemeinen durch den Außendurchmesser des Festlagers und nach innen durch den Durchmesser des Kegelrades eingeschränkt. Der axiale Bauraum ist im Allgemeinen durch den Abstand von Festlager und Loslager begrenzt.

Der geringe Unterschied von Innen- zu Außendurchmesser im verfügbaren Bauraum macht die Auswahl einer geeigneten Tellerfeder allerding schwierig. Durch die höhere Anzahl an Bauteilen kann eine einzelne Tellerfeder die auftretenden Toleranzen definitiv nicht ausgleichen. Auf der anderen Seite steht oft relativ viel axialer Bauraum zur Verfügung. Aus diesen Gründen kann erfindungsgemäß der Einsatz beispielsweise einer Schraubenfeder, d.h. einer Federwendel sinnvoll sein. In der vorliegenden Lösung kann auch wenigstens eine Wellenfeder eingesetzt werden, insbesondere da diese bei gleicher Lasthöhe eine höhere Vorspannkraft erzeugt, als eine Schraubenfeder.

Die Zustellung des Kegelrades selbst erfolgt über einen Ring mit Außengewinde. Die Steigung des Gewindes kann mit beispielsweise 1 mm sehr klein gewählt werden, um eine möglichst feine Einstellung des Flankenspiels zu Ermöglichen.

In einer Ausführungsform kann die Spannfedereinrichtung von wenigstens einer Wellenfeder, insbesondere einem Wellenfederpaket umfassend mehrere axial übereinander angeordneter Wellenfedern, gebildet werden.

Alternativ zu einer Wellenfeder kann die Spannfedereinrichtung von wenigstens einer Federwendel oder wenigstens einer Tellerfeder gebildet werden.

Erfindungsgemäß weißt die Verstellmutter eine Außenmantelwand auf, an der das mit dem Innengewinde des Getriebegehäuses zusammenwirkende Außengewinde ausgebildet ist.

In einer Ausführungsform kann die Gewindeanordnung, insbesondere das Innengewinde des Getriebegehäuses und das Außengewinde der Verstellmutter optional als ein Feingewinde ausgebildet sein, insbesondere als ein Feingewinde mit der Steigung 1.0, 0.75 oder 0.5 ausgebildet sein.

In einer Ausführungsform kann zur Bildung der Einstellvorrichtung die erste Lageranordnung ein Axialkräfte abstützendes erstes Wälzlager aufweisen, das einen mit der Antriebswelle fest verbundenen ersten Innenring und einen im Getriebegehäuse axial verstellbar gelagerten ersten Außenring aufweist, wobei die axiale Position des ersten Außenrings des ersten Wälzlagers mittels einer ersten Gewindeanordnung einstellbar ist, die ein im Getriebegehäuse festgelegtes erstes Innengewinde und ein mit dem ersten Innengewinde zusammenwirkendes erstes Außengewinde aufweist, das an einer ersten Verstellmutter ausgebildet ist, die eine erste Stirnringwand aufweist, an der sich der erste Außenring mit seiner ersten Stirnseite abstützt und eine der ersten Stirnseite gegenüberliegende zweite Stirnseite des ersten Außenrings einer Schulter am Getriebegehäuse zugewandt ist, wobei in einem zwischen der zweiten Stirnseite des ersten Außenrings und der Schulter ausgebildeten ersten Ringspalt eine erste Spannfedereinrichtung eingefügt ist, welche ausgebildet ist, den ersten Außenring axial gegen die Stirnringwand der ersten Verstellmutter zu spannen.

Die erste Spannfedereinrichtung kann beispielsweise von wenigstens einer Wellenfeder, insbesondere einem Wellenfederpaket umfassend mehrere axial übereinander angeordneter Wellenfedern, gebildet werden.

Die erste Spannfedereinrichtung kann aber auch von wenigstens einer Federwendel gebildet werden.

Die erste Verstellmutter kann eine Außenmantelwand aufweisen, an der das mit dem ersten Innengewinde des Getriebegehäuses zusammenwirkende erste Außengewinde ausgebildet ist.

Die erste Gewindeanordnung, insbesondere das erste Innengewinde des Getriebegehäuses und das erste Außengewinde der ersten Verstellmutter kann optional als ein Feingewinde ausgebildet sein, insbesondere als ein Feingewinde mit der Steigung 1.0, 0.75 oder 0.5 ausgebildet sein.

In einer Ausführungsform kann alternativ oder ergänzend zu der ersten Lageranordnung zur Bildung der Einstellvorrichtung auch die zweite Lageranordnung ein Axialkräfte abstützendes zweites Wälzlager aufweisen, das einen mit der Abtriebswelle fest verbundenen zweiten Innenring und einen im Getriebegehäuse axial verstellbar gelagerten zweiten Außenring aufweist, wobei die axiale Position des zweiten Außenrings des zweiten Wälzlagers mittels einer zweiten Gewindeanordnung einstellbar ist, die ein im Getriebegehäuse festgelegtes zweites Innengewinde und ein mit dem zweiten Innengewinde zusammenwirkendes zweites Außengewinde aufweist, das an einer zweiten Verstellmutter ausgebildet ist, die eine zweite Stirnringwand aufweist, an der sich der zweite Außenring mit seiner ersten Stirnseite abstützt und eine der ersten Stirnseite gegenüberliegende zweite Stirnseite des zweiten Außenrings einer Schulter am Getriebegehäuse zugewandt ist, wobei in einem zwischen der zweiten Stirnseite des zweiten Außenrings und der Schulter ausgebildeten zweiten Ringspalt eine zweite Spannfedereinrichtung eingefügt ist, welche ausgebildet ist, den zweiten Außenring axial gegen die Stirnringwand der zweiten Verstellmutter zu spannen.

Die zweite Spannfedereinrichtung kann beispielsweise von wenigstens einer Wellenfeder, insbesondere einem Wellenfederpaket umfassend mehrere axial übereinander angeordneter Wellenfedern, gebildet werden.

Die zweite Spannfedereinrichtung kann aber auch von wenigstens einer Federwendel gebildet werden.

Die zweite Verstellmutter kann eine Außenmantelwand aufweisen, an der das mit dem zweiten Innengewinde des Getriebegehäuses zusammenwirkende zweite Außengewinde ausgebildet ist. Die zweite Gewindeanordnung, insbesondere das zweite Innengewinde des Getriebegehäuses und das zweite Außengewinde der zweiten Verstellmutter kann optional als ein Feingewinde ausgebildet sein, insbesondere als ein Feingewinde mit der Steigung 1.0, 0.75 oder 0.5 ausgebildet sein.

In allen beschriebenen Ausführungsvarianten können das Wälzlager, insbesondere das erste Wälzlager und/oder das zweite Wälzlager jeweils als ein zweireihiges Schrägkugellager, insbesondere als ein zweireihiges Schrägkugellager in O-Anordnung ausgebildet sein.

In allen beschriebenen Ausführungsvarianten können das Wälzlager, insbesondere das erste Wälzlager und/oder das zweite Wälzlager jeweils als ein Festlager einer Fest-Los-Lageranordnung der ersten Lageranordnung und/oder der zweiten Lageranordnung ausgebildet sein.

Konkrete Ausführungsbeispiele der Erfindung sind in der nachfolgenden Figurenbeschreibung unter Bezugnahme auf die beigefügten Figuren näher erläutert.

Die Figuren zeigen:
- Fig. 1: eine perspektivische Darstellung eines beispielhaften Roboterarms mit innenliegenden Getrieben, die ausgebildet sind zum Bewegen der Gelenke des Roboterarms,
- Fig. 2: eine Explosionsdarstellung einer Ausführungsform eines Getriebes nach dem Stand der Technik,
- Fig. 3: eine Darstellungen der Ausführungsform des Getriebes gemäß Fig. 2 nach dem Stand der Technik im Zusammenbau, und
- Fig. 4: eine Darstellungen einer Ausführungsform eines erfindungsgemäßen Getriebes.

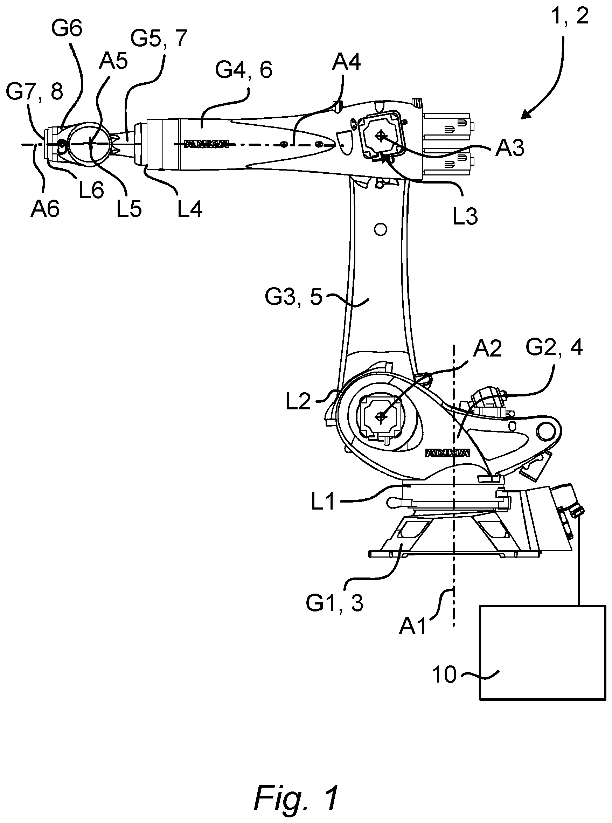

Die Fig. 1 zeigt einen Industrieroboter 1, der einen Roboterarm 2 und eine Robotersteuerung 10 aufweist. Der Roboterarm 2 umfasst im Falle des vorliegenden Ausführungsbeispiels mehrere, nacheinander angeordnete, und mittels Gelenke L1 bis L6 drehbar miteinander verbundene Glieder G1 bis G7.

Der Industrieroboter 1 weist die Robotersteuerung 10 auf, die ausgebildet ist, ein Roboterprogramm auszuführen, sowie den Roboterarm 2 mit mehreren Gliedern G1-G7 auf, die über Gelenke L1-L6 verbunden sind, die zum automatischen gegeneinander Verstellen der Glieder G1-G7 gemäß dem Roboterprogramm ausgebildet sind, wobei eines der mehreren Glieder G1-G7 ein Endglied (G7) des Roboterarms 2 bildet, das einen Werkzeugflansch 8 aufweist.

Die Robotersteuerung 10 des Industrieroboters 1 ist ausgebildet bzw. eingerichtet, ein Roboterprogramm auszuführen, durch welches die Gelenke L1 bis L6 des Roboterarms 2 gemäß des Roboterprogramms automatisiert oder in einem Handfahrbetrieb automatisch verstellt bzw. drehbewegt werden können. Dazu ist die Robotersteuerung 10 mit ansteuerbaren elektrischen Antrieben verbunden, die ausgebildet sind, die Gelenke L1 bis L6 des Industrieroboters 1 zu verstellen.

Bei den Gliedern G1 bis G7 handelt es sich im Falle des vorliegenden Ausführungsbeispiels um ein Robotergrundgestell 3 und ein relativ zum Robotergrundgestell 3 um eine vertikal verlaufende Achse A1 drehbar gelagertes Karussell 4. Weitere Glieder des Roboterarms 2 sind eine Schwinge 5, ein Armausleger 6 und eine vorzugsweise mehrachsige Roboterhand 7 mit einer als Werkzeugflansch 8 ausgeführten Befestigungsvorrichtung zum Befestigen eines Werkzeugs. Die Schwinge 5 ist am unteren Ende, d.h. an dem Gelenk L2 der Schwinge 5, das auch als Schwingenlagerkopf bezeichnet werden kann, auf dem Karussell 4 um eine vorzugsweise horizontale Drehachse A2 schwenkbar gelagert.

Am oberen Ende der Schwinge 5 ist an dem ersten Gelenk L3 der Schwinge 5 wiederum um eine ebenfalls vorzugsweise horizontale Achse A3 der Armausleger 6 schwenkbar gelagert. Dieser trägt endseitig die Roboterhand 7 mit ihren vorzugsweise drei Drehachsen A4, A5, A6. Die Gelenke L1 bis L6 sind durch jeweils einen der elektrischen Antriebe über die Robotersteuerung 10 programmgesteuert antreibbar.

Der Roboterarm 2 weist demgemäß mehrere Glieder G1 bis G7 und die Glieder G1 bis G7 gegeneinander verstellbar verbindende Gelenke L1 bis L6 auf, wobei eines der Glieder G1 ein Robotergrundgestell 3 bildet.

Der Roboterarm 2 weist im Falle des vorliegenden Ausführungsbeispiels wenigstens ein wie im Folgenden beschriebenes Getriebe auf.

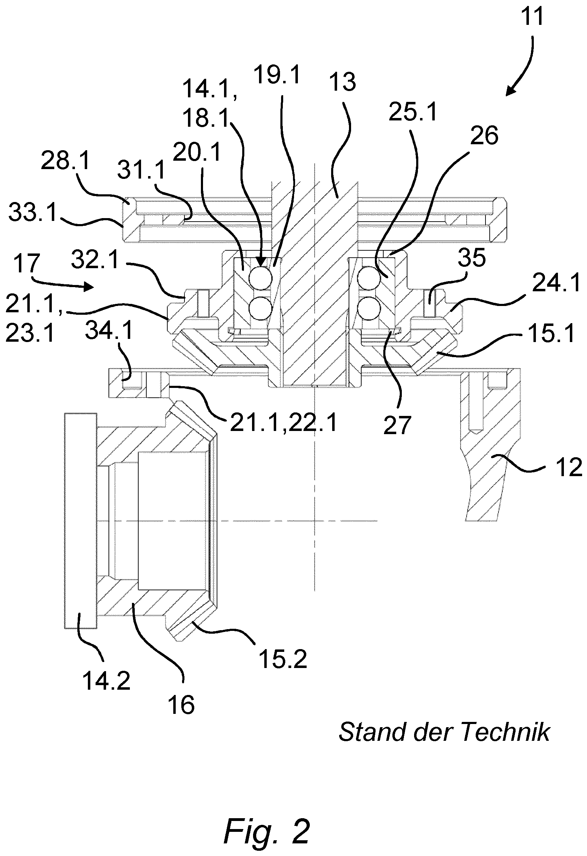

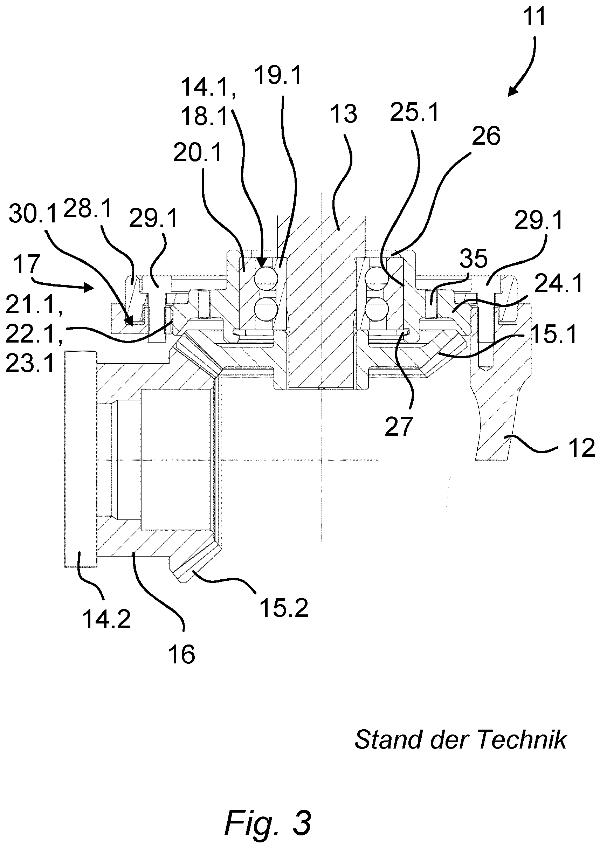

Die Fig. 2 und Fig. 3 zeigen eine Ausführungsform eines beispielhaften Getriebes 11 nach dem Stand der Technik.

Das Getriebe 11 weist ein Getriebegehäuse 12 auf. In dem Getriebegehäuse 12 ist eine Antriebswelle 13 mittels einer ersten Lageranordnung 14.1 drehbar gelagert. Die erste Lageranordnung 14.1 weist ein erstes Kegelrad 15.1 auf. In dem Getriebegehäuse 12 ist außerdem eine Abtriebswelle 16 mittels einer zweiten Lageranordnung 14.2 drehbar gelagert. Die zweite Lageranordnung 14.2 weist ein zweites Kegelrad 15.2 auf, das mit dem ersten Kegelrad 15.1 kämmend in Eingriff ist.

Das Getriebe 11 weist außerdem wenigstens eine Einstellvorrichtung 17 auf.

Wie in Fig. 2 und Fig. 3 dargestellt kann lediglich die erste Lageranordnung 14.1 des ersten Kegelrades 15.1 mit einer Einstellvorrichtung 17 versehen sein. Alternativ kann statt der ersten Lageranordnung 14.1 mit dem ersten Kegelrad 15.1 die zweite Lageranordnung 14.2 mit dem zweiten Kegelrad 15.2 die Einstellvorrichtung 17 aufweisen. Gegebenenfalls kann es auch sinnvoll sein, wenn sowohl die erste Lageranordnung 14.1 mit dem ersten Kegelrad 15.1 als auch die zweite Lageranordnung 14.2 mit dem zweiten Kegelrad 15.2 jeweils eine eigene Einstellvorrichtung 17 aufweisen. Im Folgenden wird die Einstellvorrichtung 17 jedoch lediglich anhand der ersten Lageranordnung 14.1 mit dem ersten Kegelrad 15.1 gezeigt und beschrieben. Das zur ersten Lageranordnung 14.1 Beschriebene kann sinngemäß aber auch in der Verwendung an der zweiten Lageranordnung 14.2 gelten. Die Einstellvorrichtung 17 kann demgemäß wahlweise an der Antriebswelle 13 und/oder der Abtriebswelle 16 ausgebildet sein.

Die Einstellvorrichtung 17 dient zum Einstellen des Zahnflankenspiels zwischen dem ersten Kegelrad 15.1 und dem zweiten Kegelrad 15.2 durch axiales Verstellen des ersten Kegelrades 15.1. Die Einstellvorrichtung 17 umfasst ein an der ersten Lageranordnung 14.1 ausgebildetes erstes Wälzlager 18.1 welches ausgebildet ist zumindest die Axialkräfte abzustützen. Das erste Wälzlager 18.1 weist einen mit der Antriebswelle 13 fest verbundenen ersten Innenring 19.1 und einen im Getriebegehäuse 12 axial verstellbar gelagerten ersten Außenring 20.1 auf. Die axiale Position des ersten Außenrings 20.1 des ersten Wälzlagers 18.1 ist mittels einer ersten Gewindeanordnung 21.1 einstellbar, die ein im Getriebegehäuse 12 festgelegtes erstes Innengewinde 22.1 und ein mit dem ersten Innengewinde 22.1 zusammenwirkendes erstes Außengewinde 23.1 aufweist, das an einer ersten Verstellmutter 24.1 ausgebildet ist, an welcher der erste Außenring 20.1 gelagert ist.

Die erste Verstellmutter 24.1 weist einen ersten Lagerringsitz 25.1 auf, in dem der erste Außenring 20.1 des ersten Wälzlagers 18.1 axial fixiert ist und die erste Verstellmutter 24.1 eine erste Außenmantelwand aufweist, an der das mit dem ersten Innengewinde 22.1 des Getriebegehäuses 12 zusammenwirkende erste Außengewinde 23.1 ausgebildet ist. Der erste Außenring 20.1 des ersten Wälzlagers 18.1 kann mittels eines Anlaufbundes 26 und eines Federringes 27 in dem Lagerringsitz 25.1 axial fixiert sein.

Die erste Gewindeanordnung 21.1, insbesondere das erste Innengewinde 22.1 des Getriebegehäuses 12 und das erste Außengewinde 23.1 der ersten Verstellmutter 24.1 kann als ein Feingewinde ausgebildet sein, insbesondere als ein Feingewinde mit der Steigung 1.0, 0.75 oder 0.5.

Die Einstellvorrichtung 17 umfasst im Falle des vorliegenden Ausführungsbeispiels nach dem Stand der Technik einen ersten Klemmflansch 28.1, welcher mittels erster Flanschschrauben 29.1 an einem ersten Flanschsitz 30.1 des Getriebegehäuses 12 befestigt ist. In seiner befestigten Anordnung am ersten Flanschsitz 30.1 ist die erste Verstellmutter 24.1 bezüglich des Getriebegehäuses 12 axial verspannt und/oder festklemmt, so dass die erste Gewindeanordnung 21.1, insbesondere das erste Innengewinde 22.1 des Getriebegehäuse 12 und das erste Außengewinde 23.1 der ersten Verstellmutter 24.1 gegen selbsttätiges Lösen gesichert ist.

Der erste Klemmflansch 28.1 weist im Falle des vorliegenden Ausführungsbeispiels nach dem Stand der Technik eine kreiszylindrische Innenumfangswand 31.1 auf, die mit einer korrespondierenden kreiszylindrischen Außenumfangswand 32.1 an der ersten Verstellmutter 24.1 zusammenwirkt, derart, dass die Verbindung von Innenumfangswand 31.1 und Außenumfangswand 32.1 eine erste Passung bildet, welche die erste Verstellmutter 24.1 bezüglich dem ersten Klemmflansch 28.1 zentriert. Der erste Klemmflansch 28.1 weist im Falle des vorliegenden Ausführungsbeispiels außerdem eine kreiszylindrische Außenumfangswand 33.1 auf, die mit einer korrespondierenden kreiszylindrischen Innenumfangswand 34.1 an dem Getriebegehäuse 12 zusammenwirkt, derart, dass die Verbindung von Außenumfangswand 33.1 und Innenumfangswand 34.1 eine zweite Passung bildet, welche den ersten Klemmflansch 28.1 bezüglich des Getriebegehäuses 12 zentriert.

Die erste Verstellmutter 24.1 weist ergänzend wenigstens eine erste Betätigungskontur 35 auf, die ausgebildet ist zum manuellen Drehen der ersten Verstellmutter 24.1 im ersten Innengewinde 22.1 des Getriebegehäuses 12 beispielsweise mittels eines Handwerkzeugs, insbesondere eines Flanschschlüssels. Insoweit kann die wenigstens eine erste Betätigungskontur 35 beispielsweise von zwei gegenüberliegenden Stirnlöchern der ersten Verstellmutter 24.1 gebildet werden, in die korrespondierende Stifte des Flanschschlüssels eingesteckt werden können. Der Flanschschlüssel kann auch als Stirnlochschlüssel bezeichnet werden.

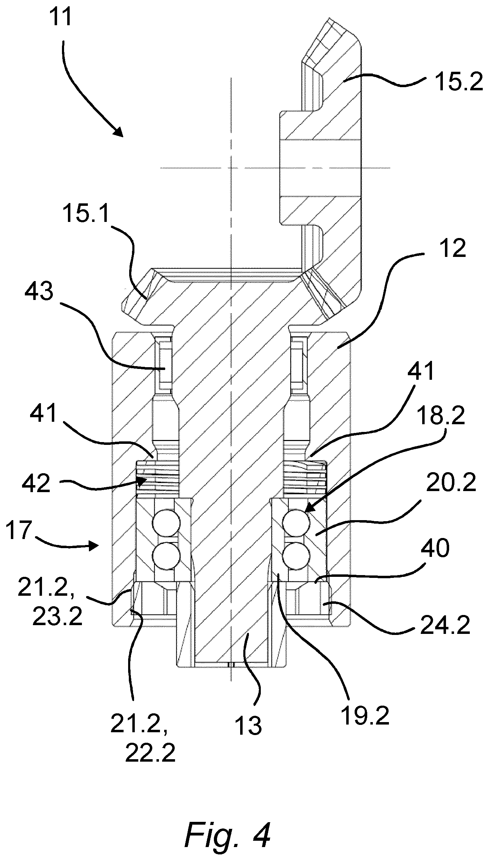

Die Fig. 4 zeigt eine erfindungsgemäße Ausführungsform eines Getriebes 11, bzw. eine erfindungsgemäße Einstellvorrichtung 17. Dieses Getriebe 11 umfasst das Getriebegehäuse 12, sowie ein erstes Kegelrad 15.1, das mit dem zweiten Kegelrad 15.2 kämmend in Eingriff ist.

Das Wälzlager 18.2 weist einen mit der Antriebswelle 13 fest verbundenen Innenring 19.2 und einen im Getriebegehäuse 12 axial verstellbar gelagerten Außenring 20.2 auf. Die axiale Position des Außenrings 20.2 des Wälzlagers 18.2 ist mittels einer ersten Gewindeanordnung 21.2 einstellbar, die ein im Getriebegehäuse 12 festgelegtes Innengewinde 22.2 und ein mit dem Innengewinde 22.2 zusammenwirkendes Außengewinde 23.2 aufweist, das an einer Verstellmutter 24.2 ausgebildet ist, an welcher der Außenring 20.2 gelagert ist.

In der erfindungsgemäßen Ausführungsform weist die Verstellmutter 24.2 eine Stirnringwand 40 auf, an der sich der Außenring 20.2 des Wälzlagers 18.2 mit seiner ersten Stirnseite abstützt und eine der ersten Stirnseite gegenüberliegende zweite Stirnseite des Außenrings 20.2 einer Schulter 41 am Getriebegehäuse 12 zugewandt ist, wobei in einem zwischen der zweiten Stirnseite des Außenrings 20.2 und der Schulter 41 ausgebildeten Ringspalt eine Spannfedereinrichtung 42 eingefügt ist, welche ausgebildet ist, den Außenring 20.2 axial gegen die Stirnringwand 40 der Verstellmutter 24.2 zu spannen.

Im Falle der erfindungsgemäßen Ausführungsform wird die Spannfedereinrichtung 42 von einer Wellenfeder gebildet. Statt einer Wellenfeder kann die Spannfedereinrichtung 42 alternativ jedoch auch als wenigstens eine Federwendel oder wenigstens eine Tellerfeder bzw. ein Tellerfederpaket gebildet werden.

Die Verstellmutter 24.2 weist eine Außenmantelwand auf, an der das mit dem Innengewinde 22.2 des Getriebegehäuses 12 zusammenwirkende Außengewinde 23.2 ausgebildet ist.

Die Gewindeanordnung 21.2, insbesondere das Innengewinde 22.2 des Getriebegehäuses 12 und das Außengewinde 23.2 der Verstellmutter 24.2 sind im Falle des vorliegenden Ausführungsbeispiels als ein Feingewinde ausgebildet, insbesondere als ein Feingewinde mit der Steigung 1.0, 0.75 oder 0.5.

In allen Ausführungsvarianten können die jeweiligen Wälzlager jeweils als ein zweireihiges Schrägkugellager, insbesondere als ein zweireihiges Schrägkugellager in O-Anordnung ausgebildet sein.

In allen Ausführungsvarianten können die jeweiligen Wälzlager jeweils als ein Festlager einer Fest-Los-Lageranordnung ausgebildet sein. So kann das jeweilige Wälzlager, welches durch die jeweilige Verstellmutter abgestützt ist, das Festlager bilden und dabei die Fest-Los-Lageranordnung durch ein separates Loslager 43 ergänzt sein.

## Patentansprüche

1. Getriebe, aufweisend ein Getriebegehäuse (12), eine im Getriebegehäuse (12) mittels einer ersten Lageranordnung (14.1) drehbar gelagerte Antriebswelle (13), die ein erstes Kegelrad (15.1) aufweist und eine im Getriebegehäuse (12) mittels einer zweiten Lageranordnung (14.2) drehbar gelagerte Abtriebswelle (16), die ein zweites Kegelrad (15.2) aufweist, das mit dem ersten Kegelrad (15.1) kämmend in Eingriff ist, sowie eine Einstellvorrichtung (17) zum Einstellen des Zahnflankenspiels zwischen dem ersten Kegelrad (15.1) und dem zweiten Kegelrad (15.2) durch axiales Verstellen des ersten Kegelrades (15.1) und/oder des zweiten Kegelrades (15.2), wobei die Einstellvorrichtung (17) ein Wälzlager (18.2) umfasst, das einen mit der Antriebswelle (13) oder der Abtriebswelle (16) fest verbundenen Innenring (19.2) und einen im Getriebegehäuse (12) axial verstellbar gelagerten Außenring (20.2) aufweist, wobei die axiale Position des Außenrings (20.2) des Wälzlagers (18.1, 18.2) mittels einer Gewindeanordnung (21.2) einstellbar ist, die ein im Getriebegehäuse (12) festgelegtes Innengewinde (22.2) und ein mit dem Innengewinde (22.2) zusammenwirkendes Außengewinde (23.2) aufweist, das an einer Verstellmutter (24.2) der Einstellvorrichtung (17) ausgebildet ist, an der sich der Außenring (20.2) abstützt, wobei die Verstellmutter (24.2) eine Stirnringwand aufweist, an der sich der Außenring (20.2) mit seiner ersten Stirnseite abstützt, **dadurch gekennzeichnet, dass** eine der ersten Stirnseite gegenüberliegende zweite Stirnseite des Außenrings (20.2) einer Schulter (41) am Getriebegehäuse (12) zugewandt ist, wobei in einem zwischen der zweiten Stirnseite des Außenrings (20.2) und der Schulter (41) ausgebildeten Ringspalt eine Spannfedereinrichtung (42) eingefügt ist, welche ausgebildet ist, den Außenring (20.2) axial gegen die Stirnringwand der Verstellmutter (24.2) zu spannen.

2. Getriebe nach Anspruch 1, **dadurch gekennzeichnet, dass** die Spannfedereinrichtung (42) von wenigstens einer Wellenfeder oder einem Wellenfederpaket umfassend mehrere axial übereinander angeordneter Wellenfedern, gebildet wird.

3. Getriebe nach Anspruch 1, **dadurch gekennzeichnet, dass** die Spannfedereinrichtung (42) von wenigstens einer Federwendel oder wenigstens einer Tellerfeder gebildet wird.

4. Getriebe nach einem der Ansprüche 1 bis 3, **dadurch gekennzeichnet, dass** die Verstellmutter (24.2) eine Außenmantelwand aufweist, an der das mit dem Innengewinde (22.2) des Getriebegehäuses (12) zusammenwirkende Außengewinde (32.2) ausgebildet ist.

5. Getriebe nach einem der Ansprüche 1 bis 4, **dadurch gekennzeichnet, dass** zur Bildung der Einstellvorrichtung (17) die erste Lageranordnung (14.1) und/oder die zweite Lageranordnung (14.2) das Wälzlager (18.1, 18.2) aufweist, welches als Axialkräfte abstützendes Wälzlager ausgebildet ist.

6. Getriebe nach einem der Ansprüche 1 bis 5, **dadurch gekennzeichnet, dass** das Wälzlager (18.1, 18.2) als ein zweireihiges Schrägkugellager in O-Anordnung ausgebildet ist.

7. Getriebe nach einem der Ansprüche 1 bis 6 **dadurch gekennzeichnet, dass** das Wälzlager (18.1, 18.2) als ein Festlager einer Fest-Los-Lageranordnung der ersten Lageranordnung und/oder der zweiten Lageranordnung ausgebildet ist.

## Claims

1. A transmission, comprising a transmission housing (12), a drive shaft (13) rotatably mounted in the transmission housing (12) by means of a first bearing assembly (14.1), which drive shaft (13) comprises a first bevel gear (15.1), and an output shaft (16) rotatably mounted in the transmission housing (12) by means of a second bearing assembly (14.2), which output shaft (16) comprises a second bevel gear (15.2) that meshes with the first bevel gear (15.1), as well as an adjustment device (17) for adjusting the tooth flank clearance between the first bevel gear (15.1) and the second bevel gear (15.2) by axially adjusting the first bevel gear (15.1) and/or the second bevel gear (15.2), wherein the adjustment device (17) comprises a rolling bearing (18.2) having an inner ring (19.2) fixedly connected to the drive shaft (13) or the output shaft (16) and an outer ring (20.2) mounted in the transmission housing (12) so as to be axially adjustable, wherein the axial position of the outer ring (20.2) of the rolling bearing (18.1, 18.2) is adjustable by means of a threaded assembly (21.2) comprising an internal thread (22.2) fixed in the transmission housing (12) and an external thread (23.2) that interacts with the internal thread (22.2) and is formed on an adjustment nut (24.2) of the adjustment device (17), against which the outer ring (20.2) bears, wherein the adjustment nut (24.2) has an end ring wall against which the outer ring (20.2) bears with its first end face, **characterized in that** a second end face of the outer ring (20.2), opposite the first end face, faces a shoulder (41) on the transmission housing (12), wherein a tension spring assembly (42) is inserted into a ring gap formed between the second end face of the outer ring (20.2) and the shoulder (41), the tension spring assembly (42) is configured to tension the outer ring (20.2) axially against the end ring wall of the adjusting nut (24.2).

2. The transmission according to claim 1, **characterized in that** the tension spring assembly (42) is formed by at least one wave spring or a wave spring assembly comprising a plurality of wave springs arranged axially one above the other.

3. The transmission according to claim 1, **characterized in that** the tension spring assembly (42) is formed by at least one coil spring or at least one disc spring.

4. The transmission according to any one of claims 1 to 3, **characterized in that** the adjustment nut (24.2) has an outer shell wall on which the external thread (32.2), which engages with the internal thread (22.2) of the transmission housing (12), is formed.

5. The transmission according to any one of claims 1 to 4, **characterized in that** the first bearing assembly (14.1) and/or the second bearing assembly (14.2) comprises the rolling bearing (18.1, 18.2), which forms the adjustment device (17) and which is designed as a rolling bearing that supports axial forces.

6. The transmission according to any one of claims 1 to 5, **characterized in that** the rolling bearing (18.1, 18.2) is designed as a double-row angular contact ball bearing in an O-arrangement.

7. The transmission according to any one of claims 1 to 6, **characterized in that** the rolling bearing (18.1, 18.2) is designed as a fixed bearing in a fixed-floating bearing arrangement of the first bearing arrangement and/or the second bearing arrangement.

## Revendications

1. Transmission comprenant un carter (12), un arbre d'entraînement (13) monté rotatif dans le carter (12) au moyen d'un premier ensemble de palier (14.1), cet arbre d'entraînement (13) comporte un premier pignon conique (15.1), et un arbre de sortie (16) monté rotatif dans le carter (12) au moyen d'un deuxième ensemble de palier (14.2), cet arbre de sortie (16) comporte un deuxième pignon conique (15.2) engrenant avec la première pignon conique (15.1), et un dispositif de réglage (17) permettant d'ajuster le jeu entre les flancs des dents de la première pignon conique (15.1) et de la deuxième pignon conique (15.2) par déplacement axial de la première pignon conique (15.1) et/ou de la deuxième pignon conique (15.2), le dispositif de réglage (17) comprenant un roulement (18.2) qui comporte une bague intérieure (19.2) solidement reliée à l'arbre d'entraînement (13) ou à l'arbre de sortie (16) et une bague extérieure (20.2) montée de manière à pouvoir se déplacer axialement dans le carter (12), la position axiale de la bague extérieure (20.2) du roulement (18.1, 18.2) étant réglable au moyen d'un dispositif fileté (21.2) comportant un filetage intérieur (22.2) fixé dans le carter (12) et un filetage extérieur (23.2) coopérant avec le filetage intérieur (22.2), lequel est formé sur un écrou de réglage (24.2) du dispositif de réglage (17), contre lequel la bague extérieure (20.2) s'appuie, l'écrou de réglage (24.2) comportant une paroi frontale sur laquelle s'appuie la bague extérieure (20.2) par sa première face frontale, **caractérisé en ce qu'**une deuxième face frontale de la bague extérieure (20.2), opposée à la première face frontale, est tournée vers un épaulement (41) du carter (12), un dispositif à ressort de serrage (42) étant inséré dans un interstice annulaire formé entre la deuxième face frontale de la bague extérieure (20.2) et l' e de l'épaulement (41) qui est conçu pour serrer axialement la bague extérieure (20.2) contre la paroi frontale de l'écrou de réglage (24.2).

2. Transmission selon la revendication 1, **caractérisée en ce que** le dispositif à ressort de serrage (42) est constitué d'au moins un ressort ondulé ou d'un ensemble de ressorts ondulés comprenant plusieurs ressorts ondulés disposés axialement les uns au-dessus des autres.

3. Transmission selon la revendication 1, **caractérisée en ce que** le dispositif à ressort de serrage (42) est constitué d'au moins un ressort hélicoïdal ou d'au moins un ressort à disque.

4. Transmission selon l'une des revendications 1 à 3, **caractérisée en ce que** l'écrou de réglage (24.2) présente une paroi extérieure sur laquelle est formé le filetage extérieur (32.2) coopérant avec le filetage intérieur (22.2) du carter (12).

5. Transmission selon l'une des revendications 1 à 4, **caractérisée en ce que**, pour former le dispositif de réglage (17), le premier ensemble de palier (14.1) et/ou le deuxième ensemble de palier (14.2) comporte le roulement (18.1, 18.2), qui est conçu comme un roulement supportant des forces axiales.

6. Transmission selon l'une des revendications 1 à 5, **caractérisée en ce que** le roulement (18.1, 18.2) est conçu comme un roulement à billes à contact oblique à double rangée en disposition en O.

7. Transmission selon l'une des revendications 1 à 6, **caractérisée en ce que** le roulement (18.1, 18.2) est conçu comme un roulement fixe d'un agencement de roulements fixe-flottant du premier agencement de roulements et/ou du deuxième agencement de roulements.
